# EUROPEAN PATENT SPECIFICATION

(11) **EP 0 777 588 B1**
(45) Date of publication and mention of the grant of the patent: **11.11.1998**
(21) Application number: 94924329.9
(22) Date of filing: 22.08.1994
(51) Int. Cl.: B60N 2/38, A47C 3/20

(54) **STEERING POST FOR A WORK MACHINE**
LENKSÄULE FÜR ARBEITSMASCHINE
COLONNE DE DIRECTION POUR ENGIN DE TRAVAIL

(30) Priority: 20.08.1993 FI 933689
(43) Date of publication of application: 11.06.1997
(73) Proprietor: LOGLIFT OY AB, SF-24100 Salo (FI)
(72) Inventor: INKINEN, Ismo, FIN-24260 Salo (FI); SAINIO, Aimo, FIN-24260 Salo (FI)
(74) Representative: Bockhorni, Josef, Dipl.-Ing.
(86) International application number: FI9400367
(87) International publication number: WO9505953

(56) References cited:
- WO-A-92/04271
- DE-A- 3 703 783
- DE-C- 3 429 424
- FI-A- 863 466
- SE-B- 396 727

## Description

The invention relates to a steering post for a work machine, in particular for a timber crane or a crane for parcelled goods, comprising a steering platform mounted on the frame of the machine and a seat connected to the steering platform by means of a seat leg (see for example WO-A-92/04271, corresponding to the preamble of claim 1.)

Such steering posts are currently very common for instance in timber vehicles, where a timber crane mounted on the vehicle is steered from a steering post attached to the crane post, for example. The steering post generally comprises a steering platform equipped with a ladder and a seat equipped with slide guides and connected to the steering platform by means of a seat leg. The crane operator controls the hydraulic directional valve from the seat by means of hand levers and foot pedals that are mounted on the steering platform by means of bearings or are attached directly to the valve.

In actual practice it is essential that the seat can be adjusted to a suitable position so that workers of different sizes can work in an ergonomically correct working position. The aforesaid fact is essential also from the point of view of industrial safety, for example. The seat can be moved horizontally forwards and backwards by means of the aforementioned slide guides. Distance adjustment by means of the slide guides is a simple and effective solution, therefore this adjustment has not generally caused any practical problems. What has been problematic in previous solutions is how to adjust the height of the seat. Height adjustment has conventionally been achieved slowly and with difficulty by moving the screw fastening of the seat leg in relation to the steering platform by means of tools. In some constructions adjustment has been so difficult that in practice it has not been done at all. A further problem in the previous solutions has been the fact that lateral blows directed towards the seat may break the seat construction and may thus lead to an interruption of work and in the worst case even to injuries. The seat may be exposed to blows for example when `he crane pivots about its vertical axis and there is not enough space left for the seat. Lack of space may be due to, for example, too long logs which are put into the load space of the vehicle and against which the seat strikes when the crane pivots.

The object of the invention is to provide a steering post by means of which the disadvantages of the prior art may be eliminated. This has been achieved by means of the steering post according to the invention as defined in claim 1. A tubular member is connected to the steering platform in a substantially vertical position and that the seat leg and the tubular member are fitted at least partly within each other and secured in their place by means of bearings so that the seat leg can move vertically in relation to the tubular member and that the seat leg may pivot about its longitudinal axis by the action of a torque reaching or exceeding a given magnitude by turning the bearings a corresponding degree in their fastening.

The primary advantage of the invention is its simplicity, i.e. easy adjustability of both the distance and the height of the seat can be achieved by means of a simple construction. A further advantage is that by means of the invention it is possible to create a construction which in a way will yield when lateral blows are directed towards the seat. Due to this yielding construction, the problems of the crane breaking down are minimized and the risk of the operator being hurt is reduced. As a result of the aforesaid simple construction the costs of production remain low, so the introduction of the invention becomes profitable.

In the following the invention will be described in greater detail by means of a preferred embodiment as shown in the accompanying drawing, in which
Figure 1 is a schematic side view of a steering post according to the invention, in connection with a timber crane,
Figure 2 is a representation of a cross-section of one of the details of the solution shown in Fig. 1,
Figure 3 is a representation of one of the details of Fig. 2 on a larger scale,
Figure 4 is a top view of the construction shown in Fig. 2,
Figure 5 is a schematic side view of the steering post according to the invention,
Figure 6 is an exploded view of the steering post according to the invention.

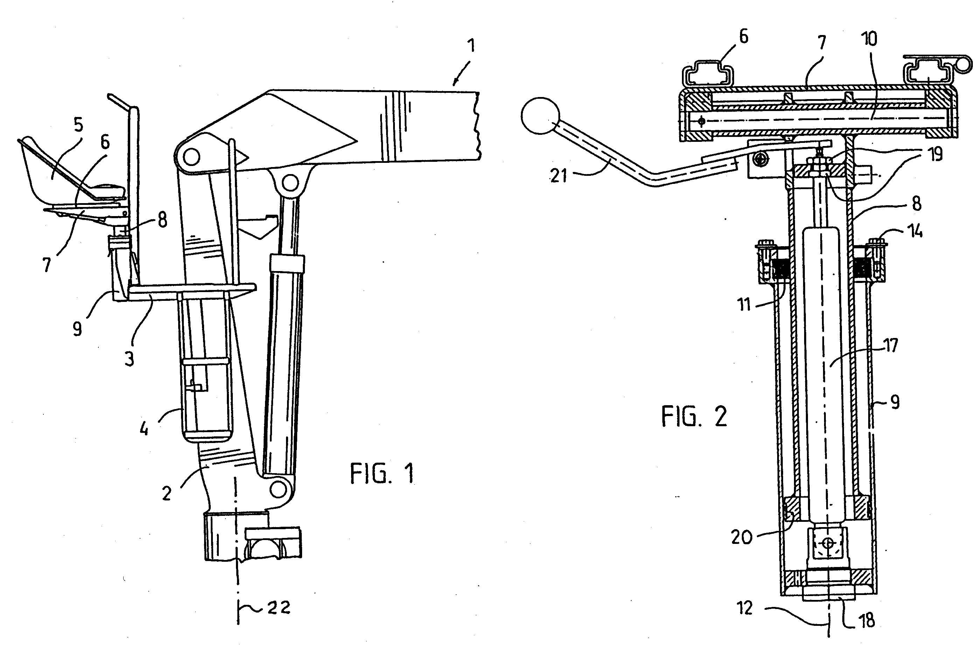

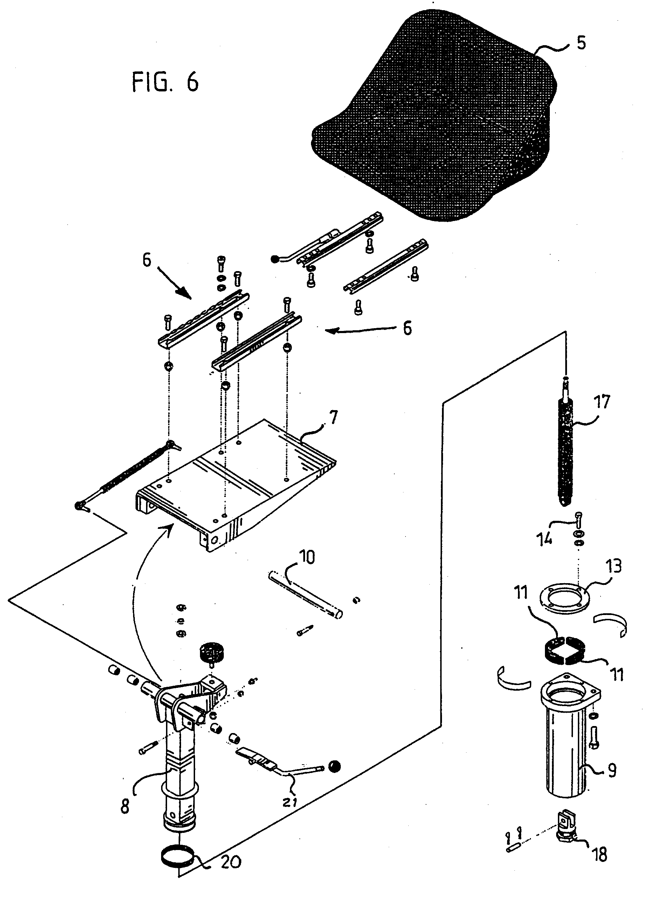

Figure 1 is a schematic representation of the steering post according to the invention, in connection with a work machine, for example a timber crane. The crane is denoted generally by the reference numeral 1. A steering platform 3 is mounted on the crane frame 2, for instance on the crane post. If necessary, the steering platform 3 may be equipped with, for example, a ladder 4. The reference numeral 5 denotes in Figure 1 a seat which is connected to the steering platform 3 by means of slide guides 6, a sliding frame 7 and a seat leg 8. The slide guides 6 and the sliding frame appear distinctly in Figures 2 and 6. The adjustment of the position of the seat either forwards or backwards is achieved by means of the slide guides 6. The seat may also be tipped into a transport position by turning the seat around the axle journal 10. The axle journal 10 is shown distinctly in Figures 2, 5 and 6, for example.

According to an essential feature of the invention, a tubular member 9 is connected to the steering platform 3 in a substantially vertical position. The seat leg 8 is fitted coaxially inside the tubular member 9 and secured in its place by means of bearings 11, so that the seat leg 8 and (necessarily) at the same time also the seat 5 attached to it may move vertically in relation to the bearings 11 connected to the tubular member 9, and that the seat leg 8 may pivot about its longitudinal axis 12 by the action of a torque reaching or exceeding a given magnitude by turning the bearings with it around its longitudinal axis 12.

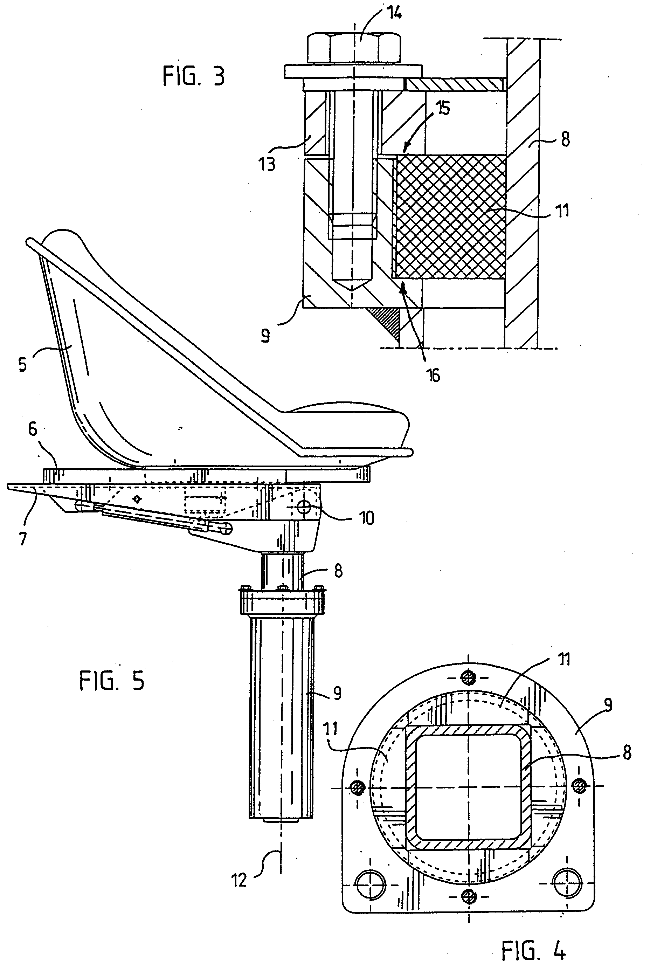

The seat leg 8 and the tubular member 9 are made of tubes with different kinds of cross-section, and the inner surface of the bearings 11 is shaped to fit the outer surface of the cross-section of the seat leg 8, and the outer surface correspondingly to fit the inner surface of the cross-section of the tubular member 9. The seat leg 8 can be made of a tube with the cross-sectional shape of a polygon, for example a tube with a square cross-section, and the tubular member 9 can be made of a tube with a substantially round cross-section. The solution described above is shown clearly in Figures 4 and 6.

The bearings 11 are connected to the tubular member 9 by means of a compressive force parallel to the longitudinal or symmetric axis 12 of the tubular member. This detail is shown clearly in Figure 3. This compressive force is adjusted to be so great that the forces caused by the normal rotating motion of the crane cannot make the seat turn. The compressive force directed at the bearings 11 is achieved by means of a tightening flange 13 and screws 14. When the screws 14 are being tightened, the bearings 11 are pressed against the tubular member 9 as described above. The pressure points are shown in Figure 3 denoted by the reference numerals 15 and 16.

The height adjustment of the seat is achieved in the example of the Figures by means of a gas spring 17 (Fig.6). The gas spring 17 is attached from one end to the tubular member 9 by means of a fixing element 18, and from another end to the seat leg 8 by means of nuts 19 (Fig.2). The seat leg 8 is secured to the tubular member 9 by means of the bearings 11 as stated above. The seat leg 8 may naturally be slideably secured to the tubular member 9 also from the lower end, if necessary. Figure 2 provides a schematic representation of this type of support denoted by the reference numeral 20.

The height of the seat may be adjusted by opening the valve of the gas spring by means of a rocking bar 21, whereupon the leg will be pushed upwards by the gas spring. It is essential to note that the bearings 11 are not tightened against the seat leg 8, but that the leg can slide quite freely in the tubular member. The adjustment downwards may be done in a corresponding manner, i.e. by opening the valve and by pressing against the force of the gas spring. The pivoting of the seat about the vertical axis, which makes the controlling of the crane difficult, is in a normal situation prevented by means of the dissimilar cross-sectional surfaces of the tubular member and the seat leg, and by means of the bearings which match these surfaces, as shown in Figure 4 and described above.

During the use of the crane there might arise a situation, however, where the seat receives blows. Such a situation occurs, for example, when the crane pivots about the vertical axis 22 of the crane post 2 shown in Figure 1, and there is no space left for the seat. Normally such a situation does not occur, but it is not entirely rare. A construction yielding to a suitable extent has been achieved by means of the invention. The vertical axis 12 of the seat leg is fitted near the vertical axis 22 of the crane post so that in an abnormal situation the turning radius of the crane is reduced as the seat pivots out of the way of an external obstacle. The bearings 11 are connected to the tubular member by means of compression active only in the axial direction as shown in Figure 3. In a normal situation the seat leg 8 cannot pivot in relation to the tubular member, since the bearings 11 connected to the tubular member prevent such a rotating motion. If a lateral force, for example a lateral blow, directed at the seat and simultaneously at the seat leg is so great that it produces a torque about the axis 12 which exceeds the force resisting rotation produced by the compression brought about in the points 15 and 16, the seat leg 8 will pivot about in the tubular member at the same time turning the bearings 11 with it inside the tubular member. Thus the construction will yield in certain situations, which guarantees that the components do not break down. The magnitude of the force which, if exceeded, causes the bearings to slide in relation to the tubular member can be controlled by adjusting the tightening of the screws 14. If the seat has pivoted as a result of a lateral blow, it is easy to loosen the screws, turn the seat back to its original position and fasten the screws 14 again back to their original tightness. It is also important to note that the seat can be fixed permanently in any position in the direction of rotation, and yet the aforesaid structure which will yield in an extreme situation is achieved.

The above embodiment of the invention is in no way intended to restrict the invention, on the contrary the invention may be varied while remaining within the scope of the claims. Thus it is evident that the steering post or its details according to the invention do not necessarily have to be exactly similar to those shown in the Figures, but that other kinds of solutions are also possible. For example, the invention is by no means restricted to the use of a gas spring, for instead of the gas spring some other control device, e.g. a hydraulic cylinder, a pneumatic cylinder, or a screw etc., can be used to achieve the fastening of the height adjustment and possibly also the compensation of the weight of the seat to facilitate the height adjustment. The height of the bearings can also be increased, thus rendering it unnecessary to support the seat leg from its lower end etc. The compressive force on the bearings can be achieved also by means of spring-like elements. Nor is the invention restricted to the seat leg being fitted inside the tubular member as in the example of the Figures, but the construction can be reversed, i.e. the tubular member can be fitted inside the seat leg.

## Claims

1. A steering post for a work machine, in particular for a timber crane or a crane for parcelled goods (1), comprising a steering platform (3) mounted on the frame of the machine (2) and a seat (5) connected to the steering platform by means of a seat leg, **characterised in that**
a tubular member (9) is connected to the steering platform (3) in a substantially vertical position and that the seat leg (8) and the tubular member (9) are fitted at least partly within each other and secured in their place by means of bearings (11) so that the seat leg (8) can move vertically in relation to the tubular member (9) and that the seat leg (8) may pivot about its longitudinal axis (12) by the action of a torque reaching or exceeding a given magnitude by turning the bearings (11) in relation to the tubular member (9), so that yielding to a suitable extent occurs, when the seat receives blows during the use of the work machine.

2. A steering post according to claim 1,
**characterized** in that the seat leg (8) and the tubular member (9) are made of tubes with different kinds of cross-section and that the surfaces of the bearings (11) against the tubular member (9) and the seat leg (8) are fitted to match the cross-sectional shapes of the tubular member (9) and the seat leg (8).

3. A steering post according to claim 2,
**characterized** in that the seat leg (8) is made of a tube with the cross-sectional shape of a polygon and that the tubular member (9) is made of a tube with a substantially round cross-section.

4. A steering post according to any one of the preceding claims 1 to 3,
**characterized** in that the bearings (11) are connected to the tubular member (9) by means of a compressive force parallel to the symmetric axis (12) of the tubular member.

5. A steering post according to any one of the preceding claims 1 to 4,
**characterized** in that the seat leg (8) is fitted inside the tubular member (9).

6. A steering post according to any one of the preceding claims 1 to 4,
**characterized** in that the tubular member (9) is fitted inside the seat leg (8).

## Patentansprüche

1. Lenksäule für eine Arbeitsmaschine, insbesondere für einen Holzkrahn oder einen Krahn für gebündelte Güter (1), mit einer Lenkplattform (3), die auf dem Rahmen der Maschine (2) befestigt ist und mit einem Sitz (5), der mit der Lenkplattform mittels eines Sitzbeines verbunden ist, **dadurch gekennzeichnet, daß**
ein Rohrteil (9) mit der Lenkplattform (3) in einer im wesentlichen vertikalen Position verbunden ist, und daß das Sitzbein (8) und das Rohrteil (9) zumindest teilweise ineinandergreifen und in ihrer Lage mittels von Lager (11) gehalten sind, so daß sich das Sitzbein (8) vertikal in Bezug auf das Rohrteil (9) bewegen kann, und daß das Sitzbein (8) um seine Längsachse (12) durch die Einwirkung eines Drehmomentes schwenken kann, welches eine gegebene Größe durch Drehen der Lager (11) relativ zum Rohrteil (9) erreicht oder überschreitet, so daß ein ausreichendes Nachgeben erfolgt, wenn der Sitz während des Einsatzes der Arbeitsmaschine Schläge aufnimmt.

2. Lenksäule nach Anspruch 1, **dadurch gekennzeichnet, daß** das Sitzbein (8) und das Rohrteil (9) aus Rohren mit unterschiedlichen Querschnitten hergestellt sind, und daß die Oberflächen der Lager (11) gegen das Rohrteil (9) und das Sitzbein (8) so ausgebildet sind, um die Querschnittsformen des Rohrteiles (9) und des Sitzbeines (8) aufzunehmen.

3. Lenksäule nach Anspruch 2, **dadurch gekennzeichnet, daß** das Sitzbein (8) aus einem Rohr mit der Querschnittsform eines Polygons hergestellt ist, und daß das Rohrteil (9) aus einem Rohr mit einem im wesentlichen runden Querschnitt hergestellt ist.

4. Lenksäule nach einem der vorangegangenen Ansprüche 1 bis 3, **dadurch gekennzeichnet, daß** das Lager (11) mit dem Rohrteil (9) mittels Druckkraft parallel zu der symmetrischen Achse (12) des Rohrteiles verbunden ist.

5. Lenksäule nach einem der vorangegangenen Ansprüche 1 bis 4, **dadurch gekennzeichnet, daß** das Sitzbein (8) innerhalb des Rohrteiles (9) angeordnet ist.

6. Lenksäule nach einem der vorangegangenen Ansprüche 1 bis 4, **dadurch gekennzeichnet, daß** das Rohrteil (9) im Sitzbein (8) angeordnet ist.

## Revendications

1. Colonne de direction pour engin de travail, en particulier pour une grue de boisage de mine ou bien une grue destinée à des produits en morceaux (1) comprenant une plate-forme de direction (3) montée sur le cadre de la machine (2) et un siège (5) connecté à la plate-forme de direction au moyen d'une patte de siège, caractérisée en ce qu'un organe tubulaire (9) est relié à la plate-forme de direction (3) dans une position sensiblement verticale et en ce que la patte de siège (8) et l'organe tubulaire (9) sont montés au moins partiellement à l'intérieur l'un de l'autre et fixés dans leur position au moyen de paliers (11) de manière que la patte de siège (8) puisse se déplacer verticalement par rapport à l'organe tubulaire (9) et que la patte de siège (8) puisse pivoter autour de son axe longitudinal (12) sous l'action d'un couple atteignant ou dépassant une valeur donnée par la rotation du palier (11) par rapport à l'organe tubulaire (9), de manière à produire un déploiement approprié lorsque le siège reçoit des secousses dans l'utilisation de l'engin de travail.

2. Une colonne de direction selon la revendication 1, caractérisée en ce que la patte de siège (8) et l'organe tubulaire (9) sont constitués de tubes ayant différents types de sections transversales, et en ce que les surfaces des paliers (11) contre l'organe tubulaire (9) et la patte de siège (8) sont équipées pour s'adapter aux formes de sections transversales de l'organe tubulaire (9) et de la patte de siège (8).

3. Une colonne de direction selon la revendication 2, caractérisée en ce que la patte de siège (8) est constituée d'un tube ayant une section transversale ayant la forme d'un polygone et en ce que l'organe tubulaire (9) est constitué d'un tube ayant une section transversale de forme sensiblement ronde.

4. Une colonne de direction selon l'une quelconque des revendications 1 à 3 précédentes, caractérisée en ce que les paliers (11) sont reliés à l'organe tubulaire (9) au moyen d'une force de compression agissant parallèlement à l'axe de symétrie (12) de l'organe tubulaire.

5. Une colonne de direction selon l'une quelconque des revendications 1 à 4 précédentes, caractérisé en ce que la patte de siège (8) est montée à l'intérieur de l'organe tubulaire (9).

6. Une colonne de direction selon l'une quelconque des revendications 1 à 4 précédentes, caractérisée en ce que l'organe tubulaire (9) est placé à l'intérieur de la patte de siège (8).
